(19) Europäisches Patentamt
European Patent Office
Office européen des brevets

(11) Veröffentlichungsnummer: **0 066 543**
**B1**

(12) # EUROPÄISCHE PATENTSCHRIFT

(45) Veröffentlichungstag der Patentschrift: **27.11.85**

(51) Int. Cl.⁴: **C 08 G 59/68**, C 08 K 5/49, C 08 K 5/55, C 08 K 5/59

(21) Anmeldenummer: **82810227.7**

(22) Anmeldetag: **26.05.82**

(54) **Thermisch polymerisierbare Gemische und Verfahren zur thermischen Polymerisation von kationisch polymerisierbaren Verbindungen.**

(30) Priorität: **02.06.81 CH 3599/81**

(43) Veröffentlichungstag der Anmeldung: **08.12.82 Patentblatt 82/49**

(45) Bekanntmachung des Hinweises auf die Patenterteilung: **27.11.85 Patentblatt 85/48**

(84) Benannte Vertragsstaaten: **BE CH DE FR GB IT LI NL SE**

(56) Entgegenhaltungen:
**DE - A - 2 750 123**
**DE - A - 3 107 044**
**GB - A - 2 081 271**

(73) Patentinhaber: **CIBA-GEIGY AG, Postfach, CH-4002 Basel (CH)**

(72) Erfinder: **Berner, Godwin, Dr., Waldhofstrasse 70, CH-4310 Rheinfelden (CH)**
Erfinder: **Kirchmayr, Rudolf, Dr., Ettingerstrasse 9, CH-4147 Aesch (CH)**

**EP 0 066 543 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft thermisch polymerisierbare Gemische aus kationisch polymerisierbaren Verbindungen und einer speziellen Katalysatorkombination sowie das entsprechende Verfahren zur thermischen Polymerisation von kationisch polymerisierbaren Verbindungen.

Kationisch polymerisierbare Verbindungen, die keine äthylenisch-ungesättigte Gruppe haben, können durch einfaches Erwärmen nicht polymerisiert werden. Auch der Zusatz von radikalischen Initiatoren hat keinen Effekt. Erst bei Verwendung von Katalysatoren, die in der Wärme einen kationischen Initiator bilden, ist eine thermische Polymerisation solcher Monomere möglich. Ein Beispiel hierfür ist die im US-A-3 236 784 beschriebene thermische Polymerisation von Trioxan in Gegenwart von aromatischen Diazoniumsalzen. Diese Diazoniumsalze haben den Nachteil einer ungenügenden Lagerfähigkeit bei Raumtemperatur. Aromatische Sulfonium- oder Jodoniumsalze von komplexen Halogeniden, von denen bekannt ist, dass sie bei UV-Bestrahlung kationische Polymerisation initieren können, wirken ohne UV-Bestrahlung erst bei relativ hohen Temperaturen als kationische Initiatoren. Erst durch Zusatz von Kupfer-II-salzen als Cokatalysatoren gemäss US-A-4 173 551 kann die Polymerisationstemperatur auf einen technologisch interessanten Bereich gesenkt werden. Technische Nachteile dieses Verfahrens sind einmal die blau-grüne Farbe der Kupfersalze, ihre ungenügende Löslichkeit in vielen Harzen und deren Vorläufer bzw. Monomeren, der autokatalytische Effekt von Schwermetallsalzen beim Lichtabbau von Polymeren, die Verschlechterung der dielektrischen Eigenschaften von Harzen durch einen Gehalt an leitfähigen Salzen und die ungenügende Lagerstabilität dieser Gemische.

F. Abdul-Rasoul, A. Ledwith und Y. Yagci beschrieben vor kurzem in Polymer, 1978, 1219–22, dass die kationische, thermische Polymerisation von Tetrahydrofuran mit Ditolyliodonium-hexafluorphosphat als Katalysator bei 70 °C unmessbar langsam verläuft. Setzt man diesem System jedoch noch einen thermischen Radikalbildner als Cokatalysator zu, so tritt innerhalb 60 Minuten bis zu 17% Polymerisationsumsatz ein. Als geeignete radikalische Cokatalysatoren sind Azoisobutyronitril, Benzoylperoxid, Phenylazo-triphenylmethan und Benzpinakol genannt. Ähnliche Effekte treten bei der Polymerisation von Butyl-vinyläther mit und ohne Azoisobutyronitril ein.

Für eine technische Verwertung dieses Effektes sind die benötigten Polymerisationszeiten zu lange bzw. die Umsätze zu niedrig. Ausserdem sind aromatische Sulfonium- und Jodoniumsalze in reiner Form schwierig herzustellen. Es besteht also weiterhin ein Bedarf nach einem Katalysatorsystem zur thermischen Polymerisation von kationisch polymerisierbaren Verbindungen.

Es wurde gefunden, dass man solche Verbindungen, insbesondere Epoxidverbindungen rasch mit hoher Ausbeute thermisch polymerisieren kann, wenn man als Initiator ein Gemisch eines quartären Ammoniumsalzes einer aromatisch-heterocyclischen Stickstoffverbindung, welches als Anion ein komplexes Halogenid-Anion hat, und eines thermischen Radikalbildners verwendet.

Gegenstand der Erfindung ist daher ein thermisch polymerisierbares Gemisch, enthaltend

A) eine oder mehrere kationisch polymerisierbare Verbindung(en)

B) ein quartäres Ammoniumsalz einer aromatisch-heterocyclischen Verbindung, die 1 oder 2 N-Atome enthält, und eines komplexen Halogenidanions aus der Reihe $BF_4^{\ominus}$, $PF_6^{\ominus}$, $SbF_6^{\ominus}$, $SbF_5(OH)^{\ominus}$ oder $AsF_6^{\ominus}$,

C) einen thermischen Radikalbildner aus einer der folgenden Klassen

$C_1$) der Diaryläthanderivate der Formel I,

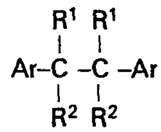
(I)

worin Ar Phenyl, Naphthyl oder durch $C_1$–$C_4$-Alkyl oder Chlor substituiertes Phenyl ist, $R^1$ OH, $C_1$–$C_4$-Alkoxy, $-O-CO-R^3$ oder $-OSi(R^4)(R^5)(R^6)$ ist, worin $R^3$ $C_1$–$C_8$-Alkyl oder Phenyl und $R^4$, $R^5$ und $R^6$ unabhängig voneinander $C_1$–$C_4$-Alkyl oder Phenyl bedeuten, und $R^2$ $C_1$–$C_4$-Alkyl, Cyclohexyl oder Ar ist,

$C_2$) einer oligomeren Verbindung der Formel II,

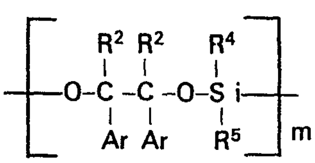
(II)

worin m 2–20 ist,

$C_3$) einer organischen Peroxyverbindung oder

$C_4$) einem Chinon und

D) gegebenenfalls weitere Zusätze.

Gegenstand der Erfindung ist weiterhin ein Verfahren zur thermischen Polymerisation von kationisch polymerisierbaren Verbindungen oder Verbindungsgemischen durch Erhitzen in Gegenwart einer Katalysatorkombination aus den vorher definierten Komponenten B) und C).

Erfindungsgemäss polymerisierbare Verbindungen sind O- oder S-enthaltende gesättige Heterocyclen, insbesondere solche mit 3, 4 oder 5 Ringgliedern, und deren Derivate. Beispiele hierfür sind Oxirane wie Äthylenoxid, Propylenoxid, Epichlorhydrin, Styroloxid, Phenylglycidyläther oder Butylglycidyläther; Oxetane wie Trimethylenoxid, 3,3-Dimethyloxetan oder 3,3-Di(chlormethyl)oxetan; Oxolane wie Tetrahydofuran oder 2,3-Dimethyltetrahydrofuran; cyclische Acetale wie Trioxan, 1,3-Dioxolan oder 1,3,6-Trioxacyclooctan; cyclische Lactone wie β-Propiolacton, ε-Caprolacton und deren Alkylderivate; Thiirane wie Äthylensulfid, 1,2-Propylensulfid oder Thioepichlorhydrin; Thiethane wie 1,3-Propylensulfid oder 3,3-Dimethylthietan.

Erfindungsgemäss polymerisierbare Verbindungen sind weiterhin solche äthylenisch ungesättigte Verbindungen, die nach einem kationischen Mechanismus polymerisierbar sind. Hierzu gehören Mono- und Diolefine wie z.B. Isobutylen, 1-Octen, Butadien, Isopren; Styrol, Allylbenzol oder Vinylcyclohexan; Vinyläther wie Vinylmethyläther, Vinyl-isobutyläther, Äthylenglykoldivinyläther; Vinylester wie Vinylacetat oder Vinylstearat; N-Vinylverbindungen wie N-Vinylpyrrolidon oder N-Vinylcarbazol, und Dihydropyranderivate wie z.B. der 3,4-Dihydro-2H-pyran-2-carbonsäureester von 2-Hydroxymethyl-3,4-dihydro-2H-pyran.

Erfindungsgemäss polymerisierbare Verbindungen sind ferner die Prepolymeren von Phenolformaldehydharzen, Harnstoff-formaldehydharzen, Melamin-formaldehydharzen, N-Methylolderivaten von Polycarbonsäureamiden, z.B. von Polyacrylamid, und ähnlichen Aminoplasten, sowie Gemische solcher Aminoplaste mit funktionellen Acrylharzen, Alkydharzen oder Polyesterharzen.

Erfindungsgemäss polymerisierbare Verbindungen sind auch Gemische von kationisch polymerisierbaren Verbindungen und radikalisch polymerisierbaren Verbindungen, beispielsweise Gemische von Epoxidharzen mit monomeren oder oligomeren (Meth)acrylsäureestern. Hierbei erfolgt die Polymerisation nach einem kationischen und einem radikalischen Mechanismus.

Unter diesen aufgeführten polymerisierbaren Verbindungen sind von besonderer Bedeutung Di- und Polyepoxide und Epoxidharz-Prepolymere, wie sie zur Herstellung von Epoxidharzen verwendet werden. Dies geschieht üblicherweise durch chemische Härtung mit Aminen, Phenolen oder Dicarbonsäureanhydriden, sei es bei Raumtemperatur oder bei Erwärmen. Verwendet man die erfindungsgemässen Katalysator-Kombinationen, so kann man die Epoxide ohne Zusatz von chemischen Reaktanten thermisch härten, das heisst, man kann ein Einkomponenten-System verwenden.

Die hierfür verwendeten Di- und Polyepoxide können aliphatische, cycloaliphatische oder aromatische Verbindungen sein. Beispiele hierfür sind die Glycidyläther von aliphatischen oder cycloaliphatischen Diolen oder Polyolen, z.B. solche von Äthylenglykol, Propandiol-1,2, Propandiol-1,3, Butandiol-1,4, Diäthylenglykol, Glycerin, Trimethylolpropan, 1,4-Dimethylol-cyclohexan oder von 2,2-Bis-(4-hydroxycyclohexyl)propan, die Glycidyläther von Di- und Polyphenolen, wie z.B. von Resorcin, 4,4'-Dihydroxydiphenylmethan, 4,4'-Dihydroxydiphenyl-2,2-propan oder Novolaken. Weitere Beispiele sind die N-Glycidylverbindungen wie z.B. die Diglycidylverbindungen von Äthylenharnstoff, 1,3-Propylenharnstoff, 5-Dimethylhydantoin, oder von 4,4'-Methylen-5,5'-tetramethyldihydantoin, oder wie Triglycidyl-isocyanurat.

Weitere Glycidylverbindungen von technischer Bedeutung sind die Glycidylester von Carbonsäuren, insbesondere von Di- und Polycarbonsäuren. Beispiele hierfür sind die Glycidylester von Adipinsäure, Phthalsäure, Tetra- oder Hexahydrophthalsäure, Isophthalsäure, Terephthalsäure, oder von Trimellithsäure.

Beispiele von Polyepoxiden, die keine Glycidylverbindungen sind, sind die Diepoxide von Vinylcyclohexen, Dicyclopentadien, 3,4-Epoxycyclohexancarbonsäure-3',4'-epoxycyclohexylmethylester, Butadien- oder Isopren-diepoxid, epoxydierte Linolsäurederivate oder epoxidiertes Polybutadien.

Weiterhin lassen sich auch äthylenisch ungesättigte Epoxidverbindungen verwenden, die unter den erfindungsgemässen Bedingungen polyfunktionell reagieren können und damit zur Bildung vernetzter Harze befähigt sind. Beispiele hierfür sind Allyl-glycidyläther, Acrylsäure- oder Methacrylsäure-glycidylester oder ungesättigte Polyepoxide wie partiell (meth)-acrylierte Epoxidharze.

Unter den erfindungsgemäss verwendbaren Epoxiden sind die Di- und Polyglycidyläther von Di- und Polyphenolen bevorzugt.

Die Di- und Polyepoxide können in Gemischen untereinander oder mit Monoepoxiden oder in Gemischen mit Hydroxylverbindungen verwendet werden, beispielsweise um die physikalischen Eigenschaften der daraus erhältlichen Harze zu modifizieren. Die Di- und Polyepoxide können auch auf chemischem Wege vorgehärtet sein, beispielsweise durch Reaktion mit Diolen, Aminen oder Dicarbonsäureanhydriden. Die Verwendung solcher Prepolymere zur Herstellung von Artikeln aus Epoxidharzen kann gegenüber der Verwendung der Di- und Polyepoxide gewisse Vorteile haben, wie z.B. einfachere Lagerung und Handhabung, schnellere formgebende Verarbeitung sowie die Möglichkeit zur Einarbeitung von Zusatzstoffen wie Glasfasern oder Pigmente in die Prepolymere z.B. bei der Herstellung von Prepregs.

Solche Prepolymere können auch auf photochemischem Wege hergestellt werden, da die Ammoniumsalze der Komponente B) bei UV-Bestrahlung sich unter Bildung von Lewis-Säuren zersetzen, welche als Initiatoren der kationischen Polymerisation wirken. Eine solche Bestrahlung kann auch in Gegenwart von Photosensibilisatoren durchgeführt werden. Schliesslich können die Prepolymeren auch nach dem erfindungsgemässen Verfahren hergestellt werden. In diesem Falle wird also das Di- oder Polyepoxid erst bei einer niedrigeren Temperaturstufe vorgehärtet und das entstandene Prepolymer bei einer höheren Temperaturstufe ausgehärtet.

Die erfindungsgemäss als Komponente B) verwendeten quartären Ammoniumsalze sind Salze von aromatisch-heterocyclischen Stickstoffbasen mit komplexen Halogenid-Anionen. Beispiele für aromatisch heterocyclische Stickstoffbasen sind vor allem sechsgliedrige Stickstoff-Heterocyclen wie Pyridin, Pyrimidin, Pyridazin und Pyrazin und deren Alkyl- oder Arylderivate, Benzo- und Naphthoderivate wie z.B. Picolin, Lutidin, Chinolin,

Isochinolin, Chinoxalin, Phthalazin, Chinazolin, Acridin, Phenanthridin oder Phenanthrolin.

Besonders bevorzugt als Komponente B) sind Ammoniumsalze der Formeln III, IV und V,

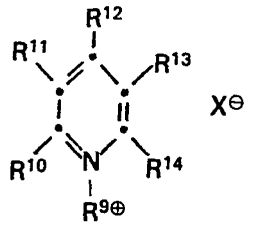

(III)

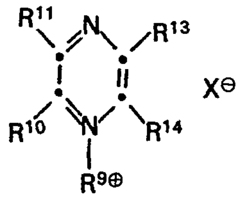

(IV)

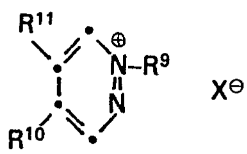

(V)

worin $R^9$ $C_1$–$C_{12}$-Alkyl, $C_3$–$C_{15}$-Alkoxyalkyl oder Benzoylmethyl ist, $R^{10}$, $R^{11}$, $R^{13}$ und $R^{14}$ unabhängig voneinander Wasserstoff, $C_1$–$C_4$-Alkyl oder Phenyl bedeuten, oder $R^{10}$ und $R^{11}$ oder $R^{11}$ und $R^{12}$ oder $R^{12}$ und $R^{13}$ oder $R^{13}$ und $R^{14}$ zusammen mit den beiden C-Atomen, an die sie gebunden sind, einen annelierten Benzo-, Naphtho-, Pyridino- oder Chinolinorest bedeuten, und X $BF_4$, $PF_6$, $SbF_6$, $SbF_5(OH)$ oder $AsF_6$ bedeutet.

Diese Ammoniumsalze sind z.B. bekannte Verbindungen, z.T. sind es neue Verbindungen, die in Analogie zu den bekannten hergestellt werden können. Die Herstellung kann insbesondere durch Quaternisierung der heterocyclischen Basen mit den Halogenverbindungen $R^9$-Hal und anschliessenden Austausch des Halogen-Anions durch X mittels der Alkalisalze von X geschehen.

Einzelne Beispiele für Verbindungen der Formeln III, IV und V sind: 1 - Methyl - chinolinium - hexafluorphosphat, 1 - Methyl - chinolinium - hexafluorantimonat, 1 - Methyl - chinolinium - hexafluorarsenat, 1 - Methyl - chinolinium - pentafluorhydroxyantimonat, 1 - Methyl - chinolinium - tetrafluorborat, 1,2 - Dimethyl - chinolinium - hexafluorphosphat, 1 - Äthyl - chinolinium - hexafluorphosphat, 1 - Butyl - chinolinium - hexafluorphosphat, 1 - Benzoylmethyl - chinolinium - hexafluorphosphat, 1 - Benzoylmethyl - chinolinium - hexafluorantimonat, 1 - Methyl - 2,3 - diphenyl - pyridinium - hexafluorphosphat, 1,2 - Dimethyl - 3 - phenyl - pyridinium-hexafluorphosphat, 1 - Benzoylmethylpyridinium - hexaluorphosphat, 1 - Äthoxyäthyl - chinolinium - hexafluorphosphat, 2 - Methyl - isochinolinium - hexafluorphosphat, 10 - Methyl - acridinium - hexafluorphosphat, 10 - Benzoylmethyl - acridinium - hexafluorphosphat, 10 - Butyl - acridinium - hexafluorarsenat, 5 - Methyl - phenanthridiniumhexafluorphosphat, 5 - Benzoylmethyl - phenanthridinium - hexafluorphosphat, 1 - Methyl - naphthyridinium - hexafluorphosphat, 1 - Methyl - 2,3 - diphenylchinoxalinium - hexafluorphosphat, 1,2,3 - Trimethyl - chinoxalinium - hexafluorphosphat, 1 - Methyl - chinazolinium - hexafluorphosphat, 1 - Methylchinnolinium - hexafluorphosphat, 1,2,4,6 - Tetramethylpyrimidinium - hexafluorphosphat, 1 - Methyl - 2,4 - diphenylpyrimidinium - hexafluorphosphat, 1 - Methyl - 3 - phenyl - pyridazinium - hexafluorphosphat, 1 - Methyl - 2,5 - diphenyl - pyridazinium - hexafluorphosphat, 1 - Methyl - phenanthrolinium - hexafluorphosphat, 5 - Butyl-phenazinium - hexafluorphosphat, 1 - Methylchinoxalinium - hexafluorphosphat, 1 - Benzoylmethyl - chinoxalinium - hexafluorphosphat.

Als Cokatalysator der Komponente C) können Diaryläthanderivate der Formel I verwendet werden. Diese stellen Pinakole und deren Äther, Ester oder Silylderivate dar. Besonders bevorzugt sind die Pinakole selbst, wie z.B. Benzpinakol oder Acetophenonpinakol.

Diese Verbindungen sind bekannte Verbindungen, die nach bekannten Verfahren hergestellt werden können. Die Pinakole werden vorzugsweise durch Reduktion von Ketonen hergestellt. Aus diesen können die Derivate durch Verätherung, Veresterung oder Silylierung gewonnen werden.

Beispiele für Verbindungen der Formel I, die als Radikalbildner erfindungsgemäss verwendet werden können, sind Benzpinakol, Benzpinakol-dimethyläther, -diäthyläther, -diisopropyläther, Benzpinakol-diacetat, -dipropionat, -dibutyrat, -dicaprylat oder -dibenzoat,1,2-Di-(trimethylsiloxy)-tetraphenyläthan, Acetophenonpinakol-dimethyläther, -dipropyläther, -diacetat, -divalerat oder -dibenzoat, Propiophenonpinakol-dimethyläther, -dibutyläther, -diacetat, 2,3-Diphenyl-2,3-bis(triphenylsiloxy)-butan oder 3,4-Diphenyl-3,4-bis-trimethylsiloxy)-hexan.

Die Verbindungen der Formel II sind oligomere Silyläther von Pinakolen mit einem Molekulargewicht von etwa 500–5000. Sie können gemäss DE-A-2 632 294 aus dem entsprechenden Arylketon durch Umsetzung mit Dialkyl- oder Diarylchlorsilanen in Gegenwart von Metallen wie Mg, Li, Na oder K hergestellt werden. Beispiele für Verbindungen der Formel II sind die Umsetzungsprodukte von Benzophenon, Propiophenon oder Acetophenon mit Dichlordimethylsilan oder Dichlordiphenylsilan in Gegenwart von Magnesium. Bevorzugt sind Verbindungen der Formel II, worin $R^2$ Phenyl ist und $R^4$ und $R^5$ Methyl sind.

Als Cokatalysator der Komponente C) können auch organische Peroxyverbindungen verwendet werden. Solche können Diorganoperoxide oder Monoorganohydroperoxide sein. Der organische Rest kann insbesondere ein Alkyl-, Cycloalkyl-, Aralkyl-, Alkanoyl- oder Aroylrest sein. Diese Verbindungen sind bekannte Verbindungen, viele von ihnen werden kommerziell als thermische Radikalbildner verwendet. Einzelne Beispiele hierfür sind: Dibenzoylperoxid, Dilauroylperoxid, Dicumylperoxid, Di-tert.butyl-peroxid, Cumylhydroperoxid, Tertiärbutylhydroperoxid, Cumyltert-butylperoxid, Tert.butylperbenzoat, Cyclohexanon-peroxid, Methyl-äthyl-ketonhydroperoxid, Acetylaceton-peroxid, Tertiärbutyl-peroctoat, Bis-2-äthylhexyl-peroxidicarbonat oder Tertiärbutyl-peracetat.

Als Cokatalysator der Komponente C) können schliesslich auch Chinone verwendet werden, wie beispielsweise Benzochinon, Naphthochinon, Tetrachlorbenzophenon, 2,3-Dichlornaphthochinon, Anthrachinon oder Tetrachloranthrachinon. Bevorzugt wird als Chinon 2,3-Dichlor-5,6-dicyanobenzochinon verwendet.

Die Verbindungen der Komponente C) sind bei Raumtemperatur stabile Verbindungen, die beim Erhitzen in Radikale zerfallen. Geschieht dies in Gegenwart von Ammoniumsalzen der Komponente B), so bilden sich Initiatoren für kationische Polymerisationen, deren genaue Struktur nicht sicher bekannt ist. Die Verbindungen der Komponenten B) und C) allein vermögen nicht – auch nicht bei erhöhter Temperatur – kationische Polymerisationen zu initieren. Durch das erfindungsgemässe Gemisch von aromatisch-heterocyclischen Ammoniumsalzen mit einem thermischen Radikalbildner erreicht man jedoch, dass kationisch polymerisierbare Verbindungen durch einfaches Erhitzen innerhalb kurzer Zeit vollständig zur Polymerisation gebracht werden können.

Zur praktischen Durchführung der Polymerisation wird das Monomere bzw. Monomerengemisch mit der notwendigen Menge beider Katalysatoren gemischt. Diese Gemische sind bei Raumtemperatur beständig und können gefahrlos gehandhabt werden. Vor der Polymerisationsauslösung braucht im allgemeinen keine zusätzliche aktivierende Komponente zugefügt werden, die Gemische stellen daher Einkomponenten-Systeme dar, die jederzeit gehärtet werden können. Die Polymerisation selbst geschieht durch Erhitzen des Gemisches auf erhöhte Temperatur. Im allgemeinen sind hierzu Temperaturen von 60°–200 °C, insbesondere von 100–160 °C, nötig, je nach dem verwendeten Material und der gewünschten Polymerisationszeit. Je kürzer die gewünschte Polymerisationszeit ist, desto höher muss die Polymerisationstemperatur sein. Meist wird man die Polymerisation unter gleichzeitiger Formgebung durchführen, also z.B. in Heizpressen oder in Formen, die einer Wärmequelle zugeführt werden. Das Erwärmen kann z.B. in einem Ofen, durch Infrarotbestrahlung oder Mikrowellen-Bestrahlung, geschehen.

Wie bereits vorhin erwähnt, kann die thermische Polymerisation auch mit einer Photopolymerisation kombiniert werden. Hierbei wird das Monomere entweder zuerst einer Bestrahlung mit kurzwelligem Licht unterworfen und anschliessend erhitzt, oder zuerst erhitzt und anschliessend bestrahlt. Zur Bestrahlung eignen sich die üblichen UV-Lampen, wobei die Wirkung der Bestrahlung noch durch Zusatz von katalytischen Mengen eines Photosensibilisators erhöht werden kann. Als Photosensibilisatoren eignen sich beispielsweise organische Farbstoffe, kondensierte aromatische Kohlenwasserstoffe wie z.B. Perylen, Antracen oder Thioxanthon und deren Derivate, wie sie allgemein als Sensibilisatoren für photochemische Prozesse bekannt sind. Der Vorteil einer solchen zusätzlichen UV-Bestrahlung ist, dass man dadurch die Zeit der thermischen Härtung verkürzen oder die Härtungstemperatur herabsetzen kann.

Die benötigte Menge der beiden Katalysatoren hängt von der Art des zu polymerisierenden Materials und den gewünschten Polymerisationsbedingungen ab. Im allgemeinen verwendet man 0,1 bis 10, vorzugsweise 0,1 bis 5 Gew.-% von jedem der beiden Katalysatoren, berechnet auf das Gewicht der zu polymerisierenden Verbindung. Bevorzugt verwendet man 1 bis 5, insbesondere 1 bis 2 Gew.-% des Ammoniumsalzes und 1 bis 2 Gew.-% des thermischen Radikalbildners.

Zusätzlich zu den polymerisierbaren Verbindungen und den Katalysatoren kann das Gemisch noch weitere Zusätze enthalten, wie sie in der Technologie der Kunststoffe und Harze üblich sind. Beispiele hierfür sind Extenderharze, Füllstoffe, Pigmente, Farbstoffe, Glasfasern oder andere Fasern, Stabilisatoren wie Antioxydantien oder Lichtschutzmittel, Flammschutzmittel, Antistatika, Treibmittel, Verlaufhilfsmittel oder Zusätze von thermischen Stabilisatoren gegen vorzeitige Gelierung, wie z.B. schwache Basen, wie Nitrile, Lactame oder Harnstoffderivate.

Diese Zusätze können gleichzeitig mit den Katalysatoren oder auch unabhängig davon vorher oder nachher den polymerisierbaren Verbindungen zugemischt werden. Je nach deren Konsistenz sind die erfindungsgemässen Gemische Feststoffe oder Flüssigkeiten bzw. hochviskose Flüssigkeiten. Für die Verwendung als Anstrichstoffe wird man eine streich- oder spritzfähige Konsistenz bevorzugen. Für die Verwendung als Giess- oder Laminierharz wird man eine giessfähige Konsistenz bevorzugen. Für die Verwendung als Pressmasse wird man eine feste Konsistenz bevorzugen.

Die Verwendung der erfindungsgemäss gehärteten Massen ist dieselbe wie die von auf konventionellem Wege gehärteten Massen. Beispiele hierfür sind der Oberflächenschutz, Klebstoffe, elektrische Isoliermassen, Herstellung von Laminaten und Formteilen oder von geschäumten Artikeln. Die Auswahl der polymerisierbaren Verbindung hängt vom Verwendungszweck ab. In gewissen Fällen wird man Gemische von kationisch härtbaren Verbindungen verwenden, um bestimmte Eigenschaften des gehärteten Harzes zu erzielen. Dies können Gemische vom gleichen chemischen Typ sein, beispielsweise zwei verschiedene Polyepoxide oder ein Polyepoxid und ein Monoepoxid, oder auch Gemische von verschiedenem Typ, wie z.B. ein Gemisch aus einem Polyepoxid und Tetrahydrofuran oder Caprolacton oder ein Gemisch aus einem Monoepoxid und einem Dicarbonsäureanhydrid.

Weitere Einzelheiten gehen aus den nachfolgenden Beispielen hervor. In diesen bedeuten Teile Gewichtsteile und % Gewichtsprozente.

Beispiel 1

In ein Reagenzglas werden 5 g eines hochviskosen Epoxidharzes auf Basis von Bisphenol-A-diglycidyläther und mit einem Epoxyäquivalent von 182–194 g/Äquivalent und je 0,1 g der in der Tabelle 1 angegebenen Katalysatoren und Cokatalysatoren gefüllt und durch Rühren unter leichtem Erwärmen (ca. 40 °C) homogenisiert. Unter ständigem Rühren mit einem Glasstab wird das Reagenzglas in einem Ölbad auf 160 °C ± 2 °C erwärmt bis aufgrund der eingetretenen Gelierung der Glasstab nicht mehr bewegt werden kann. Diese Zeit wird als Gelierzeit bezeichnet. In der folgenden Tabelle wird die Wirkung verschiedener Katalysatoren und Cokatalysatoren für sich allein oder im erfindungsgemässen Gemisch gezeigt.

Tabelle 1

| Katalysator (Komponente B) | | Cokatalysator (Komponente C) | Gelierzeit bei 160 °C |
|---|---|---|---|
| 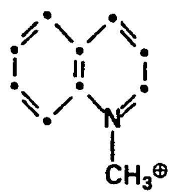 | $PF_6^{\ominus}$ | – | >20 min. |
| | | C 1 | 115 s |
| 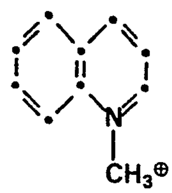 | $PF_6^{\ominus}$ | – | >20 min |
| | | C 1 | 300 s |
| 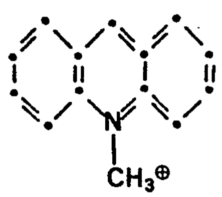 | $PF_6^{\ominus}$ | – | >20 min |
| | | C 1 | 145 s |
| | | C 2 | 110 s |
| 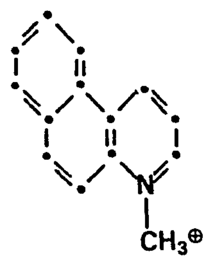 | $PF_6^{\ominus}$ | – | >20 min |
| | | C 1 | 240 s |
| 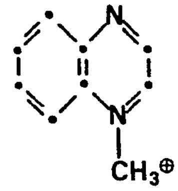 | $PF_6^{\ominus}$ | – | >20 min |
| | | C 3 | 190 s |
| | | C 4 | 290 s |
| 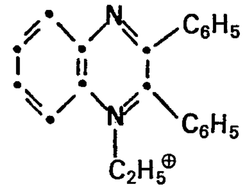 | $BF_4^{\ominus}$ | – | >20 min |
| | | C 1 | 240 s |

Tabelle 1

| Katalysator (Komponente B) | Cokatalysator (Komponente C) | Gelierzeit bei 160 °C |
|---|---|---|
| 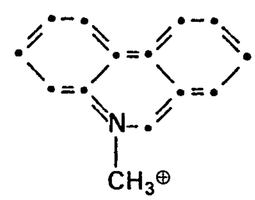 $PF_6^{\ominus}$ | – | > 20 min |
| | C 1 | 190 s |

Verwendete Cokatalysatoren:
C 1 = Benzpinakol
C 2 = Oligomeres der Formel

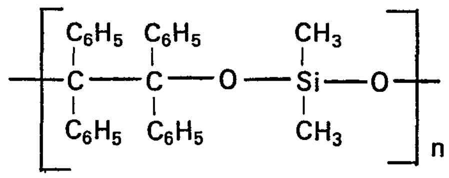

und

hergestellt analog Beispiel 3 der DE-A-2 632 294 aus Benzophenon und Dimethyldichlorsilan.
C 3 = 2,3-Dichlor-5,6-dicyanobenzochinon
C 4 = Dibenzoylperoxid

**Patentansprüche**

1. Thermisch polymerisierbares Gemisch, enthaltend

A) eine oder mehrere kationisch polymerisierbare Verbindung(en)

B) ein quartäres Ammoniumsalz einer aromatisch-heterocyclischen Verbindung, die 1 oder 2 N-Atome enthält, und eines komplexen Halogenidanions aus der Reihe $BF_4^{\ominus}$, $PF_6^{\ominus}$, $SbF_6^{\ominus}$, $SbF_5(OH)^{\ominus}$ oder $AsF_6^{\ominus}$,

C) einen thermischen Radikalbildner aus einer der folgenden Klassen

$C_1$) der Diaryläthanderivate der Formel I,

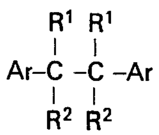

(I)

worin Ar Phenyl, Naphthyl oder durch $C_1$–$C_4$-Alkyl oder Chlor substituiertes Phenyl ist, $R^1$ OH, $C_1$–$C_4$-Alkoxy, –O–CO–$R^3$ oder –OSi($R^4$)($R^5$)($R^6$) ist, worin $R^3$ $C_1$–$C_8$-Alkyl oder Phenyl und $R^4$, $R^5$ und $R^6$ unabhängig voneinander $C_1$–$C_4$-Alkyl oder Phenyl bedeuten, und $R^2$ $C_1$–$C_4$-Alkyl, cyclohexyl oder Ar ist,

$C_2$) einer oligomeren Verbindung der Formel II,

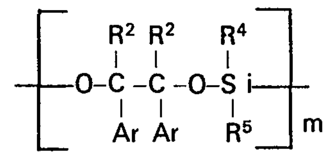

(II)

worin m 2–20 ist,

$C_3$) einer organischen Peroxyverbindung oder

$C_4$) einem Chinon und

D) gegebenenfalls weitere Zusätze.

2. Gemisch gemäss Anspruch 1, dadurch gekennzeichnet, dass es als Komponente B) eine Verbindung der Formel III, IV oder V enthält,

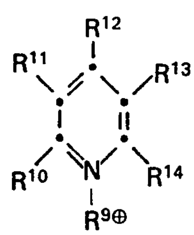 $X^{\ominus}$

(III)

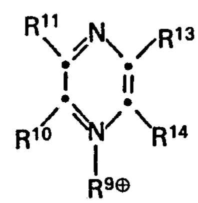 $X^{\ominus}$

(IV)

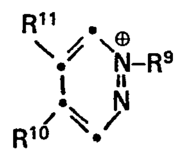 $X^{\ominus}$

(V)

worin $R^9$ $C_1$–$C_{12}$-Alkyl, $C_3$–$C_{15}$-Alkoxyalkyl oder Benzoylmethyl ist, $R^{10}$, $R^{11}$, $R^{13}$ und $R^{14}$ unabhängig voneinander Wasserstoff, $C_1$–$C_4$-Alkyl oder Phenyl bedeuten, oder $R^{10}$ und $R^{11}$ oder $R^{11}$ und $R^{12}$ oder $R^{12}$ und $R^{13}$ oder $R^{13}$ und $R^{14}$ zusammen mit den beiden C-Atomen, an die sie gebunden sind, einen annelierten Benzo-, Naphtho-, Pyridino- oder Chinolinorest bedeuten, und X $BF_4$, $PF_6$, $SbF_6$, $SbF_5(OH)$ oder $AsF_6$ bedeutet.

3. Gemisch gemäss Anspruch 1, dadurch gekennzeichnet, dass es als Komponente A) eine oder mehrere Epoxidverbindung(en) enthält.

4. Gemisch gemäss Anspruch 1, dadurch gekennzeichnet, dass es als Komponente C) eine organische Peroxyverbindung der Formel R–O–O–R' enthält, worin R Alkyl, Cycloalkyl, Aralkyl, Alkanoyl, Aroyl und R' Wasserstoff, Alkyl, Cycloalkyl, Aralkyl, Alkanoyl oder Aroyl ist.

5. Verfahren zur thermischen Polymerisation von kationisch polymerisierbaren Verbindungen

oder Verbindungsgemischen durch Erhitzen in Gegenwart eines Katalysators und eines Cokatalysators, dadurch gekennzeichnet, dass man als Katalysator ein quartäres Ammoniumsalz einer aromatisch-heterocyclischen Verbindung, die 1 oder 2 N-Atome enthält, und eines komplexen Halogenidanions aus der Reihe $BF_4^{\ominus}$, $PF_6^{\ominus}$, $SbF_6^{\ominus}$, $SbF_5(OH)^{\ominus}$ oder $AsF_6^{\ominus}$ und als Cokatalysator einen thermischen Radikalbildner gemäss Komponente C) des Anspruches 1 verwendet.

## Revendications

1. Mélange polymérisable thermiquement, qui contient:

A) un ou plusieurs composés polymérisables cationiquement,

B) un sel d'ammonium quaternaire d'un composé aromatique-hétérocyclique contenant un ou deux atomes d'azote, et d'un anion halogénure complexe pris dans l'ensemble constitué par $BF_4^{\ominus}$, $PF_6^{\ominus}$, $SbF_6^{\ominus}$, $SbF_5(OH)^{\ominus}$ et $AsF_6^{\ominus}$,

C) un générateur de radicaux thermique pris dans l'ensemble constitué par les composés des catégories suivantes:

$C_1$) les diaryl-éthanes répondant à la formule I:

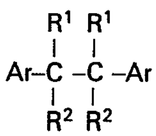

(I)

dans laquelle

Ar représente un radical phényle, un radical naphtyle ou un radical phényle porteur d'un alkyle en $C_1$–$C_4$ ou d'un atome de chlore,

$R_1$ représente un radical OH, un radical alcoxy en $C_1$–$C_4$, un radical $-O-CO-R^3$ ou un radical $-OSi(R^4)(R^5)(R^6)$, où $R^3$ désigne un alkyle en $C_1$–$C_8$ ou un phényle tandis que $R^4$, $R^5$ et $R^6$ représentent chacun, indépendamment les uns des autres, un alkyle en $C_1$–$C_4$ ou un phényle, et

$R_2$ représente un alkyle en $C_1$–$C_4$, un cyclohexyle ou un radical aromatique tel que défini pour Ar,

$C_2$) les composés oligomères répondant à la formule II:

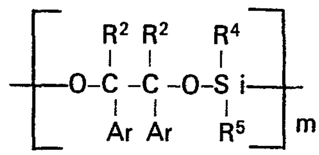

(II)

dans laquelle m est un nombre de 2 à 20,

$C_3$) les composés peroxy organiques et

$C_4$) les quinones, et

D) éventuellement des additifs supplémentaires.

2. Mélange selon la revendication 1, caractérisé en ce qu'il contient, comme composante B), un composé répondant à l'une des formules III, IV et V:

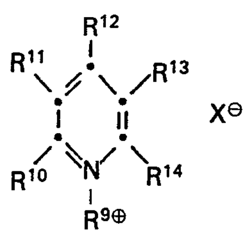

(III)

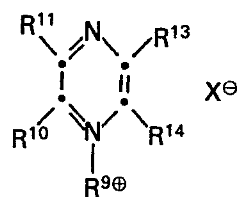

(IV)

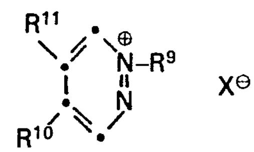

(V)

dans lesquelles $R^9$ représente un alkyle en $C_1$–$C_{12}$, un alcoxyalkyle en $C_3$–$C_{15}$ ou un benzoylméthyle, $R^{10}$, $R^{11}$, $R^{13}$ et $R^{14}$ représentent chacun, indépendamment les uns des autres, un alkyle en $C_1$–$C_4$ ou un phényle, ou encore $R^{10}$ et $R^{11}$, ou $R^{11}$ et $R^{12}$, ou $R^{12}$ et $R^{13}$, ou $R^{13}$ et $R^{14}$, forment ensemble et avec les deux atomes de carbone auxquels ils sont liés un radical benzo, naphto, pyridino ou quinoléino condensé, et X représente $BF_4$, $PF_6$, $SbF_6$, $SbF_5(OH)$ ou $AsF_6$.

3. Mélange selon la revendication 1, caractérisé en ce qu'il contient, comme composante A), un ou plusieurs composés époxydiques.

4. Mélange selon la revendication 1, caractérisé en ce qu'il contient, comme composante C), un composé peroxy organique répondant à la formule R–O–O–R' dans laquelle R représente un radical alkyle, cyclo-alkyle, aralkyle, alcanoyle ou aroyle ou R' l'hydrogène ou un radical alkyle, cyclo-alkyle, aralkyle, alcanoyle ou aroyle.

5. Procédé pour polymériser thermiquement des composés ou des mélanges de composés polymérisables cationiquement, par chauffage en présence d'un catalyseur et d'un co-catalyseur, procédé caractérisé en ce qu'on utilise, comme catalyseur, un sel d'ammonium quaternaire d'un composé aromatique-hétérocyclique contenant 1 ou 2 atomes d'azote, et d'un anion halogénure complexe pris dans l'ensemble constitué par $BF_4^{\ominus}$, $PF_6^{\ominus}$, $SbF_6^{\ominus}$, $SbF_5(OH)^{\ominus}$ et $AsF_6^{\ominus}$, et, comme co-catalyseur, un générateur de radicaux thermique selon la composante C) de la revendication 1.

## Claims

1. A thermally polymerisable mixture which comprises

A) one or more cationally polymerisable compounds,

B) a quaternary ammonium salt of an aromatic-heterocyclic compound which contains 1 or 2 N-atoms, and of a complex halide anion selected from the series consisting of $BF_4^{\ominus}$, $PF_6^{\ominus}$, $SbF_6^{\ominus}$, $SbF_5(OH)^{\ominus}$ or $AsF_6^{\ominus}$,

C) a thermal radical former selected from one of the following classes

$C_1$) diaryl ethane derivatives of the formula I

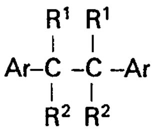

(I)

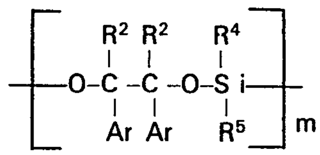

(II)

wherein Ar is phenyl, naphthyl or phenyl which is substituted by $C_1$–$C_4$ alkyl or chlorine, $R^1$ is OH, $C_1$–$C_4$alkoxy, –O–CO–$R^3$ or –OSi($R^4$)($R^5$)($R^6$), wherein $R^3$ is $C_1$–$C_8$alkyl or phenyl, and each of $R^4$, $R^5$ and $R^6$ independently is $C_1$–$C_4$alkyl or phenyl, and $R^2$ is $C_1$–$C_4$alkyl, cyclohexyl or Ar,

$C_2$) an oligomeric compound of the Formula II

wherein m is 2 to 20,

$C_3$) an organic peroxide compound or

$C_4$) a quinone, and

D) optionally further additives.

2. A mixture according to claim 1, which contains, as component (B), a compound of the formula III, IV or V

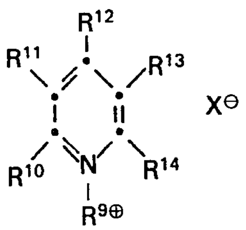

(III)

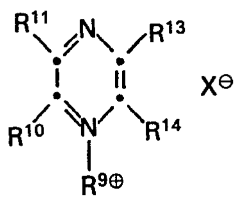

(IV)

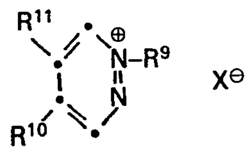

(V)

wherein $R^9$ is $C_1$–$C_{12}$alkyl, $C_3$–$C_{15}$alkoxyalkyl or benzoylmethyl, each of $R^{10}$, $R^{11}$, $R^{13}$ and $R^{14}$ independently is hydrogen, $C_1$–$C_4$alkyl or phenyl, or $R^{10}$ and $R^{11}$ or $R^{11}$ and $R^{12}$ or $R^{12}$ and $R^{13}$ or $R^{13}$ and $R^{14}$, together with the two carbon atoms to which they are attached, are a fused benzo, naphtho, pyridino or quinolino radical, and X is $BF_4$, $PF_6$, $SbF_5(OH)$ or $AsF_6$.

3. A mixture according to claim 1, which contains, as component (A), one or more epoxy compounds.

4. A mixture according to claim 1, which contains, as component (C), an organic peroxide compound of the formula R–O–O–R′, wherein R is alkyl, cycloalkyl, aralkyl, alkanoyl or aroyl, and R′ is hydrogen, alkyl, cycloalkyl, aralkyl, alkanoyl or aroyl.

5. A process for the thermal polymerisation of cationically polymerisable compounds or mixtures of compounds by heating in the presence of a catalyst and a co-catalyst, which process comprises using as catalyst a quaternary ammonium salt of an aromatic-heterocyclic compound which contains 1 or 2 N-atoms, and a complex halide anion selected from the group consisting of $BF_4^{\ominus}$, $PF_6^{\ominus}$, $SbF_6^{\ominus}$, $SbF_5(OH)^{\ominus}$ or $AsF_6^{\ominus}$, and, as cocatalyst, a thermal radical former according to component (C) of claim 1.